(19) Europäisches Patentamt
European Patent Office
Office européen des brevets

(11) **EP 1 609 159 B1**

(12) **EUROPÄISCHE PATENTSCHRIFT**

(45) Veröffentlichungstag und Bekanntmachung des Hinweises auf die Patenterteilung:
**07.11.2007 Patentblatt 2007/45**

(21) Anmeldenummer: **04725032.9**

(22) Anmeldetag: **01.04.2004**

(51) Int Cl.:
***H01F 1/153*** *(2006.01)*

(86) Internationale Anmeldenummer:
**PCT/EP2004/003485**

(87) Internationale Veröffentlichungsnummer:
**WO 2004/088681 (14.10.2004 Gazette 2004/42)**

(54) **MAGNETKERN, VERFAHREN ZUR HERSTELLUNG EINES SOLCHEN MAGNETKERNS, ANWENDUNGEN EINES SOLCHEN MAGNETKERNS INSBESONDERE BEI STROMTRANSFORMATOREN UND STROMKOMPENSIERTEN DROSSELN SOWIE LEGIERUNGEN UND BÄNDER ZUR HERSTELLUNG EINES SOLCHEN MAGNETKERNS**

MAGNET CORE, METHOD FOR THE PRODUCTION OF SUCH A MAGNET CORE, USES OF SUCH A MAGNET CORE ESPECIALLY IN CURRENT TRANSFORMERS AND CURRENT-COMPENSATED INDUCTORS, AND ALLOYS AND BANDS USED FOR PRODUCING SUCH A MAGNET CORE

NOYAU MAGNETIQUE, PROCEDE DE REALISATION ASSOCIE, UTILISATION D'UN NOYAU MAGNETIQUE DE CE TYPE NOTAMMENT DANS DES TRANSFORMATEURS DE COURANT ET DANS DES BOBINES DE CHOC A COMPENSATION DE COURANT, ALLIAGES ET BANDES POUR REALISER UN TEL NOYAU MAGNETIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **02.04.2003 DE 10315061**

(43) Veröffentlichungstag der Anmeldung:
**28.12.2005 Patentblatt 2005/52**

(73) Patentinhaber: **Vacuumschmelze GmbH & Co. KG**
**63450 Hanau (DE)**

(72) Erfinder:
• **HERZER, Giselher**
**63486 Bruchköbel (DE)**

• **OTTE, Detlef**
**63584 Gründau (DE)**

(74) Vertreter: **Schmuckermaier, Bernhard**
**Westphal & Partner**
**Mozartstrasse 8**
**80336 München (DE)**

(56) Entgegenhaltungen:
| | |
|---|---|
| **EP-A- 0 429 022** | **EP-A- 1 096 634** |
| **WO-A-00/17897** | **WO-A-99/45643** |
| **US-A- 5 591 276** | **US-A1- 2001 001 398** |
| **US-B1- 6 507 262** | |

## Beschreibung

Die Erfindung betrifft einen Magnetkern mit einer hohen Aussteuerbarkeit für Wechselstrom- und Gleichstromkomponenten, ein Verfahren zur Herstellung eines solchen Magnetkerns und Anwendungen eines solchen Magnetkerns insbesondere bei Stromtransformatoren und stromkompensierten Drosseln sowie Legierungen und Bänder zur Herstellung eines solchen Magnetkerns.

Bei zahlreichen Anwendungen von Magnetkernen werden eine hohe Aussteuerbarkeit für Wechselstrom- und Gleichstromkomponenten gefordert, wobei eine je nach Anwendungsfall spezifische Austeuerbarkeit für jeweils Wechselstrom und Gleichstrom notwendig ist. Anwendungen von Magnetkernen mit hoher Aussteuerbarkeit für Wechselstrom- und Gleichstromkomponenten sind zum Beispiel bei Stromtransformatoren und stromkompensierten Drosseln gegeben.

Stromkompensierte Funkentstördrosseln sind beispielsweise in DE-A 35 26 047 und DE 195 48 530 A1 beschrieben. Sie verfügen für Einphasenanwendung über zwei, bei Mehrphasenanwendung über drei oder mehr Wicklungen. Die Wicklungen von Funkentstördrosseln sind so geschaltet, dass sich die magnetischen Flüsse, die aufgrund des Betriebsstromes induziert werden, gegenseitig aufheben, während Störströme, die gleichphasig durch die beiden Wicklungen fließen, eine Magnetisierung des weichmagnetischen Kerns zur Folge haben. Hierdurch wirkt die somit entstandene stromkompensierte Funkentstördrossel als sehr kleiner induktiver Widerstand in Bezug auf die Betriebsströme, während Störströme, die beispielsweise von angeschlossenen Geräten ausgehen und sich über Erde schließen, auf eine sehr hohe Induktivität treffen.

Der Kern der bekannten stromkompensierten Funkentstördrossel ist beispielsweise aus amorphen oder nanokristallinen Legierungen, vorzugsweise Bandmaterial, hergestellt. Die Induktivität der Drossel hängt dabei neben Windungszahl und Kernquerschnitt im wesentlichen von der relativen Permeabilität des weichmagnetischen Materials des Magnetkerns ab.

Stromtransformatoren mit den eingangs genannten Magnetkernen können wiederum beispielsweise bei Energiezählern verwendet werden, wie dies etwa in der WO 00/30131 beschrieben ist. Energiezähler werden beispielsweise zur Erfassung des Energieverbrauchs elektrischer Geräte und Anlagen in Industrie und Haushalt eingesetzt. Das älteste dabei gebräuchliche Prinzip ist das des Ferraris-Zählers. Der Ferraris-Zähler basiert auf der Energiezählung über die Rotation einer mit einem mechanischen Zählwerk verbundenen Scheibe, die durch die strom- bzw. spannungsproportionalen Felder entsprechender Feldspulen angetrieben wird. Für die Erweiterung der Funktionsmöglichkeiten von Energiezählern wie z.B. für Mehrtarifbetrieb oder Fernablesung werden elektronische Energiezähler eingesetzt, bei denen die Strom- und Spannungserfassung über Strom- und Spannungswandler erfolgt. Die Ausgangssignale dieser Wandler werden digitalisiert, multipliziert, integriert und gespeichert; das Ergebnis ist eine elektrische Größe, die u.a. für eine Fernablesung zur Verfügung steht.

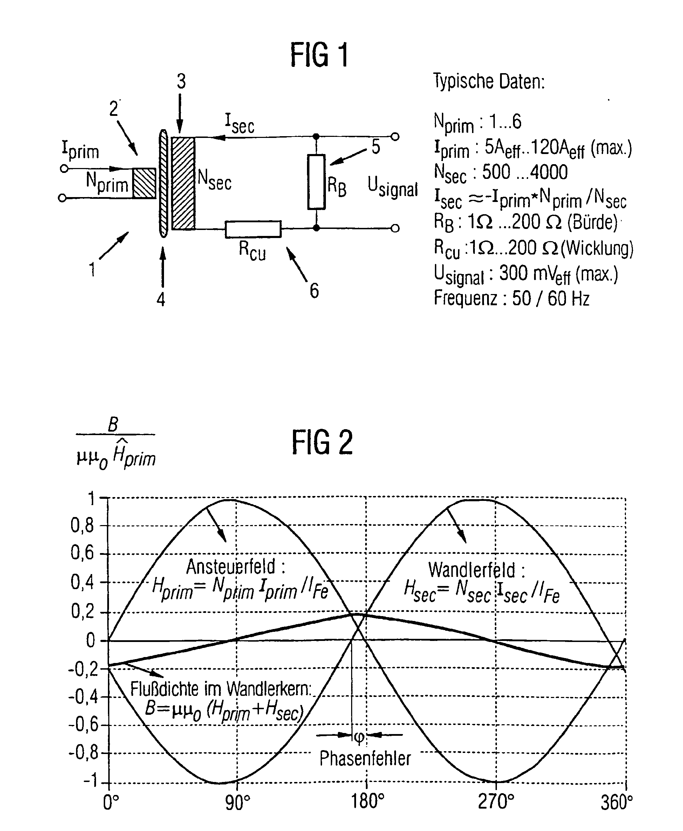

Eine der möglichen technischen Ausführungen eines solchen Stromwandlers ist der Stromtransformator nach dem Induktionsprinzip. Die Figur 1 zeigt ein Ersatzschaltbild eines solchen Stromtransformators und die Bereiche der technischen Daten, wie sie in verschiedenen Anwendungen auftreten können. Gezeigt ist hier ein Stromtransformator 1. Auf einem Magnetkern 4, der aus einem weichmagnetischen Werkstoff aufgebaut ist, befindet sich die Primärwicklung 2, die den zu messenden Strom $I_{prim}$ führt und eine Sekundärwicklung 3, die den Sekundärstrom $I_{sec}$ führt. Dieser Strom $I_{sec}$ stellt sich automatisch so ein, dass die Amperewindungen primär und sekundär im Idealfall gleich groß und entgegengesetzt gerichtet sind. Der Verlauf der Magnetfelder in einem solchen Stromtransformator ist in der Figur 2 dargestellt, wobei die Verluste im Magnetkern wegen ihres im allgemeinen geringen Wertes nicht berücksichtigt sind. Der Strom in der Sekundärwicklung 3 stellt sich dann nach dem Induktionsgesetz so ein, dass er die Ursache seiner Entstehung, nämlich die zeitliche Änderung des magnetischen Flusses im Magnetkern 4, zu hindern versucht.

Im idealen Stromtransformator ist daher der Sekundärstrom, multipliziert mit dem Verhältnis der Windungszahlen, negativ gleich dem Primärstrom, was durch Gleichung (1) veranschaulicht wird:

$$I_{sec}^{ideal} = -I_{prim} * (N_{prim} / N_{sec}) \qquad (1)$$

Dieser Idealfall wird wegen der Verluste im Bürdenwiderstand 5, im Kupferwiderstand 6 der Sekundärwicklung und im Magnetkern 4 nie erreicht.

Im realen Stromtransformator weist daher der Sekundärstrom gegenüber der obigen Idealisierung einen Amplitudenfehler und einen Phasenfehler auf, was durch Gleichung (2) beschrieben wird:

$$Amplitudenfehler : F(I) = \frac{I_{sec}^{real} - I_{sec}^{ideal}}{I_{sec}^{ideal}} ; \; Phasenfehler : \varphi(I) = \phi(I_{sec}^{real}) - \phi(-I_{prim}) \quad (2)$$

Die Ausgangssignale eines solchen Stromtransformators werden digitalisiert und in der Elektronik des Energiezählers weiterverarbeitet.

Die zur Energiezählung in industriellen Anwendungen eingesetzten elektronischen Energiezähler arbeiten wegen der oft sehr hohen (>> 100 A) Ströme indirekt, d.h. es sind den Stromeingängen spezielle Primär - Stromtransformatoren vorgeschaltet, sodass nur rein bipolare, nullsymmetrische Wechselströme (typisch 1 ... 6 A$_{eff}$) im Zähler selbst gemessen werden müssen. Dazu dienen Stromtransformatoren, die mit Magnetkernen aus hochpermeablen Werkstoffen, beispielsweise Nickel-Eisen-Legierungen, die ca. 80 Gew.% Nickel enthalten und unter dem Namen "Permalloy" bekannt sind, aufgebaut sind. Diese weisen zur Erreichung geringer Messfehler grundsätzlich einen sehr niedrigen Phasenfehler φ auf, wozu sie außerdem mit sehr vielen (typ. mehr als 1000) Sekundärwindungen ausgestattet sind.

Für den Einsatz in Haushaltszählern, die auch in industriellen Kleinanlagen einsetzbar sind, sind diese nicht geeignet, da beim hierbei üblichen direkten Anschluss ohne vorgeschaltete Primär - Strom transformatoren die Stromstärken in der Regel 100 A und mehr betragen können und dadurch die oben beschriebenen Stromtransformatoren sättigen würden. Weiterhin können diese Ströme nicht nullsymmetrische Gleichstromanteile enthalten, die durch die in modernen Elektrogeräten eingesetzten Halbleiterschaltungen (z.B. Gleichrichter- oder Phasenanschnittschaltungen) erzeugt werden und die Stromtransformatoren mit hochpermeablen Magnetkernen magnetisch sättigen und damit die Energiezählung verfälschen.

Die hierfür maßgeblichen internationalen Normen der Reihe IEC 62053 geben vor, dass ein elektronischer Energiezähler für die Einhaltung der Genauigkeitsklassen 1 bzw. 2% für einen angegebenen maximal messbaren Effektivwert I$_{max}$ eines bipolaren nullsymmetrischen Sinusstroms eine maximale Amplitude eines unipolaren halbwellengleichgerichteten Sinusstroms mit einem maximalen Zusatzfehler von 3 bzw. 6% messen können muss, deren Zahlenwert gleich dem des maximalen Effektivwerts ist. Neben diesen Normen existieren nationale und regionale Festsetzungen, die ein als ausreichend genau definiertes Verhalten der Energieerfassung auch mit einem niedrigeren Amplitudengrenzwert des unipolaren Stroms gestatten.

Für die Abbildung solcher Ströme sind Stromwandler bekannt, die auf Basis offener bzw. mit mechanisch eingebrachten Luftspalten gescherter und dadurch niederpermeabler Magnetkreise arbeiten. Ein Beispiel für einen solchen Stromwandler ist ein Stromtransformator, bei dem ein mit einem Luftspalt versehener (gescherter) Ferrit-Schalenkern als Magnetkern eingesetzt wird. Dieser verfügt über eine befriedigende Linearität als Funktion des Primärstroms, jedoch ist aufgrund der relativ niedrigen Sättigungsinduktion der Ferrite ein vergleichsweise großvolumiger Magnetkern erforderlich, um bei dem Stromtransformator einen hohen maximal messbaren Primärstrom bei hoher Linearität über den gesamten Strombereich zu erzielen. Diese Stromtransformatoren weisen ferner ebenfalls eine hohe Empfindlichkeit gegenüber externen Fremdfeldern auf, so dass auch dort Abschirmmaßnahmen getroffen werden müssen, die materialund montageintensiv und daher kostenmäßig wenig günstig sind. Außerdem sind bei Ferriten in der Regel die Magnetwerte stark temperaturabhängig.

Des weiteren sind Stromwandler bekannt, die auf der Basis eisenloser Luftspulen arbeiten. Dieses Prinzip ist als sogenanntes Rogowski-Prinzip bekannt. Hierbei entfällt der Einfluss der Eigenschaften eines weichmagnetischen Werkstoffes auf die Messgenauigkeit. Wegen der magnetisch offenen Konstruktion solcher Stromwandler müssen diese mit besonders aufwendigen Abschirmungen gegen äußere Felder ausgestattet werden, was wegen des Material- und Montageaufwandes ebenfalls kostenintensiv ist.

Eine technisch hochwertige Möglichkeit zur Realisierung ist die Verwendung von Stromtransformatoren mit verhältnismäßig niederpermeablen (μ = 1400 ... 3000) Magnetkernen aus rascherstarrten amorphen weichmagnetischen Werkstoffen. Die sehr gute Konstanz dieser Permeabilität bei Veränderungen der Aussteuerung gewährleistet eine sehr hohe Linearität des Phasenfehlers über den gesamten zu übertragenden Strombereich. Durch den niedrigen Wert der Permeabilität wird eine Sättigung mit Gleichstromanteilen in kalkulierbaren Grenzen vermieden; sie führt dagegen zum Auftreten eines vergleichsweise hohen Phasenfehlers zwischen Primär- und Sekundärstrom, der im Energiezähler durch eine entsprechende elektronische Schaltung oder Software kompensiert werden muss. In bisher bekannten Ausführungen elektronischer Energiezähler ist ein Kompensationsbereich von typisch 0,5 ... 5° vorhanden, wobei die Kompensation der höheren Werte aus diesem Bereich jedoch einen zunehmenden Aufwand bezüglich der signalverarbeitenden Halbleiterschaltungen und -speicher erfordert, der die Gerätekosten erhöht. Ein aus Sicht der im Markt für Energiezähler konkurrierenden Hersteller ernsthaftes Problem stellen die Kosten für die zu verwendeten Magnetwerkstoffe dar, da die bisher verwendeten Legierungen um die 80 Atom% Co enthalten, was zu einem vergleichsweise hohen Materialpreis führt.

Es ist Aufgabe der Erfindung, einen Magnetkern, der eine hohe Aussteuerbarkeit für Wechselstrom- und Gleichstromkomponenten aufweist, in seinen anwendungsbezogenen Eigenschaften zu verbessern. Es ist weiterhin Aufgabe der Erfindung, den Magnetkern im Hinblick auf seine Eigenschaften so auszulegen, dass er für unterschiedliche Anwendungsfälle geeignet ist, sowie Anwendungen für einen solchen Magnetkern anzugeben. Ferner ist es Aufgabe der vorliegenden Erfindung einen besonders kostengünstigen Magnetkern bereitzustellen. Es ist schließlich noch Aufgabe der Erfindung, ein Herstellungsverfahren für derartige Magnetkerne anzugeben.

Die Aufgabe wird gelöst durch einen Magnetkern mit den Merkmalen des Hauptanspruchs 1. Die Aufgabe wird weiterhin durch einen derartige Magnetkerne aufweisenden Stromtransformator gemäß Anspruch 20 und eine derartige Magnetkerne aufweisende Drossel gemäß Anspruch 23 gelöst. Schließlich wird die Aufgabe noch durch ein Herstellungsverfahren gemäß Anspruch 16 gelöst. Ausgestaltungen und Weiterbildungen des Erfindungsgedankens sind Gegenstand von Unteransprüchen.

Im Vergleich zum Stand der Technik ist beispielsweise ein Stromtransformator mit einem erfindungsgemäßen Magnetkern in seinen Eigenschaften (zum Beispiel Temperaturgang, Phasenfehler, maximaler Primärstrom, maximaler unipolarer Primärstrom sowie Kosten) gegenüber bekannten Stromtransformatoren (beispielsweise mit Ferritkernen) deutlich verbessert. Der Magnetkern kann dabei auch luftspaltlos und geschlossen ausgebildet werden. Neben einer hohen Aussteuerbarkeit für Wechselstrom- und Gleichstromkomponenten hat er eine insbesondere für Stromzähleranwendungen hervorragend geeignete hohe Linearität der Stromabbildung über einen weiten Strombereich und eine hohe Immunität gegenüber externen Fremdmagnetfeldern ohne zusätzliche Abschirmmaßnahmen. Es hat sich demnach gezeigt, dass sich die erfindungsgemäßen Magnetkerne in besonderem Maße für Stromtransformatoren und stromkompensierte Drosseln eignen. Sie können jedoch auch bei beliebigen anderen Anwendungen vorteilhaft eingesetzt werden.

Aufgrund einer durch die besonderen Eigenschaften des erfindungsgemäßen Magnetkerns möglichen einfachen Konstruktion von Stromtransformatoren und stromkompensierten Drosseln mit geringen Kernmassen aus Legierungen, die zudem keine oder nur geringe Anteile des teuren Elementes Co enthalten, sowie mit einer Bewicklung mit verhältnismäßig niedrigen Windungszahlen, ist er außerdem sehr preiswert herstellbar und somit für die oben genannten Anwendungen besonders geeignet. Darüber hinaus ist die Temperaturabhängigkeit der genannten Eigenschaften möglichst gering.

Bei der Auslegung eines erfindungsgemäßen Stromtransformators auf einen vorgegebenen maximalen Primärstrom wurde davon ausgegangen, dass dieser Strom proportional zu der materialspezifischen Sättigungsinduktion, dem Kernquerschnitt und umgekehrt proportional zur Summe der Werte für den Bürdenwiderstand und den Widerstand der Sekundärwicklung ist. Die Kerngröße (Volumen) ist das Produkt aus Kernquerschnitt und mittlerer magnetischer Weglänge. Die Kernmasse ergibt sich daraus durch Multiplikation mit der Materialdichte. Gleichzeitig ist die maximale unipolare Stromamplitude proportional zur materialspezifischen Sättigungsinduktion und zur mittleren magnetischen Weglänge des Kerns sowie umgekehrt proportional zur Permeabilität des Materials.

Es wurde dabei ein minimaler Phasenfehler erreicht, der näherungsweise bis zu einem Wert für den Phasenfehler von ca. $\leq 8°$ proportional zur oben genannten Widerstandssumme und umgekehrt proportional zur Permeabilität ist. Außerdem wurde auf eine größtmögliche Sättigungsinduktion abgezielt. Die amorphen Werkstoffe mit ca. 80 Atom% Co besitzen Werte für die Sättigungsinduktion von 0,8 ... 1 T. Eine Erhöhung würde eine Verkleinerung des Magnetkerns bei gleichem Maximalstrom gestatten oder die Erhöhung des Maximalstroms bei gleicher Kerngröße ermöglichen.

Zunächst sei angenommen, dass die Kerngröße (das Kernvolumen) konstant bleibt. Ebenfalls sollen sich die in der Regel vom Zählerkonstrukteur mitbestimmten Größen wie Sekundärwindungszahl sowie Bürdenwiderstand nicht ändern. Damit würde der Stromtransformator bei einer Erhöhung der Sättigungsinduktion von 0,9 T auf 1,2 T, wie sie zum Beispiel ein nanokristalliner Werkstoff mit 10 Atom% Ni aufweist, einen um 33% höheren Primärstrom abbilden können. Weiterhin würde eine solche Konstruktion bei gleichbleibender maximaler unipolarer Stromamplitude mit einer erhöhten Sättigungsinduktion und bei gleichbleibender Kerngröße eine höhere Permeabilität zulassen, beispielsweise die Erhöhung von 1500 ... 3000 bei einem amorphen Werkstoff mit ca. 80 Atom% Co auf 2000 ... 4000 für einen nanokristallinen Werkstoff mit 10 Atom% Ni. Diese wiederum führt zu einem um ca. 25% niedrigeren Phasenfehler, was den Kompensationsaufwand im Energiezähler deutlich reduziert. Wird dann noch die Möglichkeit zu einer Verringerung des Kernquerschnitts um 25% für einen gleichbleibenden maximalen Primärstrom genutzt sowie die Größenverhältnisse zum Zweck der Reduktion des Widerstandes der Sekundärwicklung entsprechend eingestellt, so ist es möglich, bei gleichbleibendem Bürdenwiderstand den Phasenfehler von 5° auf beispielsweise 2,5° zu halbieren.

Die Kosten für das Kernmaterial würden sich in diesem Fall bei der Verwendung eines nanokristallinen Werkstoffes mit 10 Atom% Ni auf rund 30% der Materialkosten bei einem Kern aus amorphem Werkstoff mit ca. 80 Atom% Co reduzieren lassen.

Eine bevorzugte Ausführungsform eines erfindungsgemäßen Magnetkerns, der insbesondere zum Einsatz in einem Stromtransformator geeignet ist, sieht vor, dass der Magnetkern aus einem gewickelten Band aus einer ferromagnetischen Legierung besteht, bei der mindestens 50% der Legierung von feinen kristallinen Teilchen mit einer mittleren Teilchengröße von 100 nm oder weniger, vorzugsweise von 50 nm oder weniger, eingenommen wird (nanokristalline Legierung), er eine Permeabilität aufweist, die größer als 1000, vorzugsweise 1500, und kleiner als 10000, vorzugsweise 6000, ist, welche durch Anlassen in einem Magnetfeld senkrecht zur Magnetisierungsrichtung eingestellt wird. Die Sättigungsinduktion ist dabei größer gleich 1 Tesla.

Weitere bevorzugte Ausführungsformen weisen zudem eine Sättigungsmagnetostriktion $\lambda_s$ < 15 ppm (vorzugsweise < 10 ppm) auf. Solche Eigenschaften können üblicherweise entweder nur durch teure Co-Basis-Legierungen erreicht werden, während bei nanokristallinen Fe-Basislegierungen der Permeabilitätsbereich bei gängigen Legierungen größer 10000 ist. Die Legierung für einen erfindungsgemäßen Magnetkern weist eine Zusammensetzung auf, die im wesentlichen mit der Formel

$$Fe_aCo_bNi_cCu_dM_eSi_fB_gX_h$$

zu umschreiben ist, worin M zumindest eines der Elemente V, Nb, Ta, Ti, Mo, W, Zr, Cr, Mn und Hf ist, a, b, c, d, e, f, g in Atom-% angegeben sind, X die Elemente P, Ge, C sowie handelsübliche Verunreinigungen bezeichnet und wobei a, b, c, d, e, f, g, h die folgenden Bedingungen erfüllen:

$0 \le b \le 40$
$2 < c < 20$
$0,5 \le d \le 2;$
$1 \le e \le 6;$
$6,5 \le f \le 18;$
$5 \le g \le 14;$
$h < 5$ Atom%

mit $5 \le b + c \le 45$, wobei a + b + c + d + e + f = 100.

Bevorzugt sind Magnetkerne mit einer Legierungszusammensetzung a, b, c, d, e, f, g, h, die die folgende Bedingung erfüllt:

$0 \le b \le 20$
$2 < c \le 15$
$0,5 \le d \le 2;$
$1 \le e \le 6;$
$6,5 \le f \le 18;$
$5 \le g \le 14;$
$h < 5$ Atom%

mit $5 \le b + c \le 30$, wobei a + b + c + d + e + f =100.

Besonders bevorzugt sind Magnetkerne mit einer Legierungszusammensetzung a, b, c, d, e, f, g, h, die die folgende Bedingung erfüllt:

$0 \le b \le 10$
$2 < c \le 15$
$0,5 \le d \le 2;$
$1 \le e \le 6;$
$6,5 \le f \le 18;$
$5 \le g \le 14;$
$h < 5$ Atom%

mit $5 \le b + c \le 20$, wobei a + b + c + d + e + f = 100.

Ganz hervorragende Ergebnisse liefern Magnetkerne, deren Legierungszusammensetzungen die folgenden Bedingungen erfüllen:

$0,7 \le d \le 1.5;$
$2 \le e \le 4;$
$8 \le f \le 16;$
$6 \le g \le 12;$
$h < 2$ Atom%

mit $5 \le b + c \le 20$, wobei a + b + c + d + e + f = 100 sind. Vorzugsweise Ausführungsformen haben einen Co-Gehalt der kleiner als der Ni-Gehalt ist.

Es hat sich gezeigt, dass bei einem solchen Magnetkern die Abhängigkeit der Permeabilität von der Magnetisierung sehr klein ist. Die Hystereseschleife des Magnetkerns ist also sehr schmal und linear. Dies setzt ein möglichst kleines Verhältnis von Remanenzinduktion zu Sättigungsinduktion von möglichst weniger als 30% (vorzugsweise 20 %) und kleine Koerzitivfeldstärken von möglichst weniger als 1 A/cm, besser 0.2 A/cm voraus. Dieses führt zu einer hohen Konstanz der Permeabilitätswerte. So beträgt die Nichtlinearität der Permeabilität $\Delta\mu/\overline{\mu} < 15\%$ (besser kleiner 10%), wobei $\Delta\mu$ der größte Wert für die Differenz zwischen Minimal- und Maximalwert der Permeabilität über den gesamten messbaren Magnetisierungsbereich bis ca. 5% unterhalb der Sättigungsinduktion von beispielsweise 1,2 Tesla ist und $\overline{\mu}$ den Mittelwert der Permeabilität in diesem Magnetisierungsbereich darstellt.

Ein Stromtransformator mit einem erfindungsgemäßen Magnetkern weist neben dem Magnetkern mindestens eine Primärwicklung und eine Sekundärwicklung auf, zu der ein Bürdenwiderstand parallel geschaltet ist und der den Sekundärstromkreis niederohmig abschließt. Da die Permeabilität des Magnetkerns in dem genannten Bereich im wesentlichen unabhängig von der Magnetisierung ist, sind der absolute Phasenfehler und der absolute Amplitudenfehler dieses Stromwandlers mit einem solchen Magnetkern dabei über einen weiten Primärstrombereich nahezu konstant. Der absolute Amplitudenfehler kann kleiner als 1 % sein. Der absolute Phasenfehler kann kleiner als 5° sein. Aufgrund der guten Linearität sind die Absolutwerte von Phasen- und Amplitudenfehlern durch die Elektronik oder die Software des mit ihm ausgestatteten Energiezählers leicht kompensierbar, was zu einer hohen Messgenauigkeit für die elektrische Leistung führt.

Aufgrund der nanokristallinen Struktur weist der Magnetkern eine überraschend hohe Alterungsbeständigkeit auf, die eine obere Anwendungsgrenztemperatur für den Magnetkern von über 120°C, in Einzelfällen sogar um 150°C erlaubt. Gerade dadurch eignet sich der Stromwandler mit dem Magnetkern für einen Einsatz weit oberhalb der Raumtemperatur.

Die Eigenschaften des Magnetkerns sind nur schwach temperaturabhängig, wobei diese Abhängigkeit wiederum weitgehend linear verläuft. Der Temperaturkoeffizient der Permeabilität sollte dabei einen Absolutbetrag von deutlich weniger als 0,5%/K, vorzugsweise weniger als 0,2%/K betragen.

Der Erfindung liegt auch die Erkenntnis zugrunde, dass mit der Legierung der beschriebenen Zusammensetzung durch eine geeignete Wärmebehandlung ein Magnetkern mit den beschriebenen Eigenschaften erzeugt werden kann. Dabei sind sehr viele Parameter aufeinander abzustimmen, damit der Magnetkern die beschriebenen Eigenschaften aufweist.

Durch die bei der Wärmebehandlung erzeugte nanokristalline Zweiphasenstruktur werden bei gleichzeitig hoher Sättigungsinduktion und hoher thermischer Stabilität die beiden grundlegenden Voraussetzungen für gute weichmagnetische Eigenschaften erfüllt. Der Kern wir vorzugsweise aus Bändern hergestellt, die ihrerseits aus einer erfindungsgemäßen Legierung hergestellt sind.

Die Erfindung wird nachfolgend anhand der in den Figuren der Zeichnung dargestellten Ausführungsbeispiele näher erläutert. Es zeigt:

Figur 1      ein Ersatzschaltbild eines bekannten Stromwandlers und die Bereiche verschiedener technischer Daten, die im Betrieb auftreten können,

Figur 2      der Verlauf der Magnetfelder bei einem Stromwandler nach Figur 1,

Figur 3      den Verlauf des Amplitudenfehlers (in %) und des Phasenfehlers (in °)in Abhängigkeit vom Primärstrom (in A) für einen Nennprimärstrom $I_{primN}$ von 640 A,

Figur 4      den Verlauf des Amplitudenfehlers (in %) und des Phasenfehlers (in °)in Abhängigkeit vom Primärstrom (in A) für einen Nennprimärstrom $I_{primN}$ von 400 A, und

Figur 5      die Hystereseschleife für eine bevorzugte Legierung gemäß der Erfindung.

Im nachfolgenden wird beispielhaft das Anwendungsfeld "Stromtransformatoren mit Gleichstromtoleranz für elektronische Energiezähler" betrachtet. Bei den einschlägigen Untersuchungen hat sich gezeigt, dass bei den seit langem bekannten klassischen Stromtrafos mit hochpermeablen Kernen die Erfüllung der Anforderungen der Normenreihe IEC 62053 nach Gleichstromtoleranz nicht möglich ist. Diese für die Anforderungen von elektronischen Haushaltszählern mit direktem Anschluss maßgebliche Normen fordern, dass auch bei Vorliegen halbwellengleichgerichteter (also rein unipolarer) Sinusströme die Energieerfassung möglich sein muss.

Hier versagen klassische Stromtransformatoren, weil die hochpermeablen Kerne sehr schnell durch den sich aufbauenden unipolaren Fluss gesättigt werden. Mit abnehmender Permeabilität des Kernmaterials sinkt mit der Induktivität auch die Zeitkonstante des Flussabfalls, sodass die Lösung für das Problem in der Verwendung niederpermeabler amorpher Legierungen gesucht wurde. Nachteilig ist hier aber der vergleichsweise hohe Preis, der hauptsächlich durch das amorphe Band mit ca. 80% Co bedingt ist.

Ausgangspunkt der Überlegungen ist es also, eine alternative sehr niederpermeable ($\mu$ vorzugsweise ca. 1500 ... 6000) Legierungsvariante zu finden, die geeignet ist, die amorphen niederpermeablen Co-Basis - Bänder mit deutlichen Kostenvorteilen zu ersetzen.

Wichtig ist hierbei auch die Klärung der Frage, ob die erreichbare Linearität soweit an die in dieser Hinsicht exzellenten Co-Basis-Bänder herankommt, so dass die Anforderungen an die Genauigkeit der Energiemessung erfüllt werden können. Mit einiger Sicherheit ist zu erwarten, dass die höhere Sättigungsinduktion auf dem Wege einer Optimierung in die jeweilige Anwendung übertragen werden kann. Voraussetzung ist eine einwandfreie Funktionalität gemäß IEC 62053, die bisher einen erheblichen technischen Vorteil gegenüber dem Einsatz billiger Ferritkerne hat.

Zunächst wurden Bänder untersucht, die im Si-Gehalt sowie im Nb-Gehalts variiert werden. Das Versuchsprogramm umfasste je zwei Kerne jeder Variante mit 2 unterschiedlichen Temperaturen bei der Querfeld-Wärmebehandlung und 3 Legierungszusammensetzungen. Im Rahmen der stichversuchsartigen Legierungsvariation wurden Bänder der Breite 6,2 mm aus Versuchslegierungen gegossen und zu Ringbandkemen verarbeitet. Diese wurden zur Erzielung einer möglichst flachen Hystereseschleife im Querfeld bei verschiedenen Temperaturen behandelt. Zunächst wurden die erzielten mittleren Permeabilitäten $\mu_{av}$ sowie weitere Basisparameter ermittelt (s. Tabelle 1):

Tabelle 1: Legierungen mit V- und Ni-Zusätzen

| Kern Nr. | Fe | Ni | Cu | Nb | V | Si | B | $T_{QF}$ [°C] | $B_{max}$ [T] | $B_r / B_m$ | $H_c$ [mA/cm] | $H_a$ [A/cm] | $\mu$ (av) | $\square_s$ [ppm] |
|---|---|---|---|---|---|---|---|---|---|---|---|---|---|---|
| 1A | Rest | 10 | 1 | 3 | 0 | 15,9 | 6,6 | 540 | 1,12 | 0,008 | 13 | 1,75 | 5.08 3 | 4,4 |
| 1B | Rest | 10 | 1 | 3 | 0 | 15,9 | 6,6 | 570 | 1,13 | 0,009 | 15 | 2,01 | 4.46 3 | 2,8 |
| 2A | Rest | 10 | 1 | 3 | 0 | 12,5 | 8 | 540 | 1,19 | 0,008 | 19 | 2,95 | 3.19 8 | 7,7 |
| 2B | Rest | 10 | 1 | 3 | 0 | 12,5 | 8 | 570 | 1,20 | 0,011 | 35 | 3,49 | 2.73 5 | 6,7 |
| 3A | Rest | 10 | 1 | 1,5 | 1,5 | 12,5 | 8 | 540 | 1,20 | 0,016 | 59 | 3,71 | 2.57 8 | 6,5 |
| 3B | Rest | 10 | 1 | 1,5 | 1,5 | 12,5 | 8 | 570 | 1,20 | 0,057 | 216 | 3,94 | 2.42 5 | 5,8 |

Zu Beginn der Untersuchung wurden alle Kerne spannungsfrei in Tröge ohne Füllmittel eingesetzt, die anschließend für die Messungen der Linearitäten geeignet bewickelt wurden, wobei zunächst die Werte bei 25°C betrachtet wurden. Die Ergebnisse sind in Tabelle 2 zusammengefasst:

Tabelle 2: Legierungen mit V- und Ni-Zusätzen und "unfixierter" Linearität (spannungsfrei im Trog)

| Kern Nr. | Fe | Ni | Cu | Nb | V | Si | B | $T_{QF}$ [°C] | $\mu_{mittel}$ | $\Delta\mu / \mu_{mittel}$ [%] |
|---|---|---|---|---|---|---|---|---|---|---|
| 1A-1 | Rest | 10 | 1 | 3 | 0 | 15,9 | 6,6 | 540 | 5598 | 6,13 |
| 1A-2 | Rest | 10 | 1 | 3 | 0 | 15,9 | 6,6 | 540 | 5605 | 6,24 |
| 1B-1 | Rest | 10 | 1 | 3 | 0 | 15,9 | 6,6 | 570 | 4919 | 6,97 |
| 1B-2 | Rest | 10 | 1 | 3 | 0 | 15,9 | 6,6 | 570 | 4888 | 6,79 |
| 2A-1 | Rest | 10 | 1 | 3 | 0 | 12,5 | 8 | 540 | 3549 | 5,49 |
| 2A-2 | Rest | 10 | 1 | 3 | 0 | 12,5 | 8 | 540 | 3523 | 5,52 |
| 2B-1 | Rest | 10 | 1 | 3 | 0 | 12,5 | 8 | 570 | 3033 | 4,12 |
| 2B-2 | Rest | 10 | 1 | 3 | 0 | 12,5 | | 570 | 2981 | 3,48 |
| 3A-1 | Rest | 10 | 1 | 1,5 | 1,5 | 12,5 | 8 | 540 | 2724 | 5,88 |
| 3A-2 | Rest | 10 | 1 | 1,5 | 1,5 | 12,5 | 8 | 540 | 2714 | 5,46 |
| 3B-1 | Rest | 10 | 1 | 1,5 | 1,5 | 12,5 | 8 | 570 | 2282 | 12,5 |
| 3B-2 | Rest | 10 | 1 | 1,5 | 1,5 | 12,5 | 8 | 570 | 2300 | 12,5 |

Für eine bessere Übersicht ist die Linearität der Kurvenverläufe durch das Maß $\Delta\mu/\mu_{mittel}$ ausgedrückt, wobei die letzten beiden Datenpunkte beim Einlauf in die Sättigung nicht in die Mittelwertbildung einbezogen wurden. Die Magnetkerne zeigen größtenteils eine Linearität, die geeignet ist, um bei der Anwendung der Kerne für Stromtransformatoren in elektronischen Energiezählern die geforderte Präzision der Energiemessung über einen weiten Strombereich sicherzustellen. Eine Ausnahme bildet die Variante 3B, bei der mit 12,5% ein relativ hoher Wert erzielt wurde, was vermutlich eine Übertemperung im Querfeld zur Ursache hat.

Zur Ermittlung des anwendungsbezogenen Fixierungseinflusses wurden anschließend ein Kern von jeder Variante entweder mit einer isolierenden Kunststoffschicht überzogen oder in einen angepassten Kunststofftrog mit weich-elastischem Klebstoff eingesetzt und erneut bewickelt/gemessen. Dabei ergaben sich deutlich unterschiedliche Bilder für das Linearitätsverhalten der Kerne, das aus den beiden folgenden Tabellen 3 und 4 ersichtlich:

Tabelle 3: Linearität fertigungsnah fixiert (Kunststoffschicht)

| Kern Typ / Nr. | Fe | Ni | Cu | Nb | V | Si | B | $T_{QF}$ [°C] | $\mu_{mittel}$ | $\Delta\mu / \mu_{mittel}$ [%] |
|---|---|---|---|---|---|---|---|---|---|---|
| 1A-1 | Rest | 10 | 1 | 3 | 0 | 15,9 | 6,6 | 540 | 10170 | 151 |
| 1B-1 | Rest | 10 | 1 | 3 | 0 | 15,9 | 6,6 | 570 | 8403 | 138 |
| 2A-1 | Rest | 10 | 1 | 3 | 0 | 12,5 | 8 | 540 | 6555 | 161 |
| 2B-1 | Rest | 10 | 1 | 3 | 0 | 12,5 | 8 | 570 | 4881 | 129 |
| 3A-1 | Rest | 10 | 1 | 1,5 | 1,5 | 12,5 | 8 | 540 | 3696 | 82,9 |
| 3B-1 | Rest | 10 | 1 | 1,5 | 1,5 | 12,5 | 8 | 570 | 2262 | 35,1 |

Tabelle 4: Linearität fertigungsnah fixiert (Kunststofftrog mit weich-elastischem Klebstoff)

| Kern Typ / Nr. | Fe | Ni | Cu | Nb | V | Si | B | $T_{QF}$ [°C] | $\mu_{mittel}$ | $\Delta\mu / \mu_{mittel}$ [%] |
|---|---|---|---|---|---|---|---|---|---|---|
| 1A-2 | Rest | 10 | 1 | 3 | 0 | 15,9 | 6,6 | 540 | 5716 | 13,2 |
| 1B-2 | Rest | 10 | 1 | 3 | 0 | 15,9 | 6,6 | 570 | 4947 | 5,15 |
| 2A-2 | Rest | 10 | 1 | 3 | 0 | 12,5 | 8 | 540 | 3587 | 5,46 |

(fortgesetzt)

| Kern Typ / Nr. | Fe | Ni | Cu | Nb | V | Si | B | $T_{QF}$ [°C] | $\mu_{mittel}$ | $\Delta\mu/\mu_{mittel}$ [%] |
|---|---|---|---|---|---|---|---|---|---|---|
| 2B-2 | Rest | 10 | 1 | 3 | 0 | 12,5 | 8 | 570 | 3033 | 3,06 |
| 3A-2 | Rest | 10 | 1 | 1,5 | 1,5 | 12,5 | 8 | 540 | 2699 | 6,74 |
| 3B-2 | Rest | 10 | 1 | 1,5 | 1,5 | 12,5 | 8 | 570 | 2305 | 12,7 |

Die Tabelle 3 zeigt einen sehr deutlichen Einfluss der Kunststoffschicht auf die Linearität der Kennlinien. Über die durch den Ni - Zusatz bewirkte Magnetostriktion reagiert der Werkstoff derartig stark auf die Schrumpfspannung der bei ca. 120°C erstarrenden und beim Abkühlen kontrahierenden Schicht, dass die resultierenden Linearitäten für einen Einsatz in einem Präzisionsstromtransformator nicht mehr sinnvoll erscheinen. Die Linearitätsabweichungen erreichen Werte, die um einen Faktor von 9 bis zu über 50 über denen der zum Vergleich dienenden Werte magnetostriktionsfreier amorpher Co-Basislegierungen liegen.

Ein deutlich günstigeres Verhalten wird durch die Trogfixierung bewirkt. Hier steigen bei der Verwendung eines weich-elastischen Klebstoffes die Nichtlinearitäten nur um max. einen Faktor 2 an. In jedem Fall erscheinen die Varianten 1B, 2A, 2B und 3A bei Raumtemperatur zum Einsatz als für hochlineare Stromtrafos sinnvoll. Für die weitergehenden Überlegungen zum Einsatz über einen weiten (z. B. -40°C bis +70°C) Temperaturbereich wurden die Temperatureigenschaften der komplexen Permeabilität ebenfalls betrachtet. Zum Beispiel zeigen die Verläufe für den Kern 2A-2 einen negativen Temperaturkoeffizient der Permeabilität, der zwischen -40°C und +85°C nahezu linear verläuft und für den Kern 2B-2 einen Wert von ca. -0,1 %/K hat. Der Wert gilt sowohl für eine Amplitude des erregenden Feldes von 4 mA/cm als auch für 15 mA/cm. Es wurde aufgefunden, dass ein positiver Temperaturkoeffizient für den Stromtrafo insofern günstig ist, als dass er sich bei steigender Temperatur entgegengesetzt zum steigenden Widerstand des Kupferdrahtes verhält und somit den Phasenfehler reduziert. Bei der Auslegung von Stromtransformatoren muss also auf die resultierende größere Variation der Fehler mit der Temperatur besonders geachtet werden. Bei der Verwendung des weichelastischen Klebstoffes zeigte sich, dass eine Temperaturänderung sowohl bei hohen als auch bei tiefen Temperaturen zu zusätzlichen Linearitätsabweichungen der Wandlerfehler führt. Hier treten Zug- bzw. Druckspannungen am Kern auf, die sich wegen des elastischen Verhaltens des ausgehärteten Klebstoffs vom Trogmaterial her übertragen. Eine deutliche Verringerung dieses Effektes konnte dadurch realisiert werden, dass als Füllmasse anstelle des weich-elastischen Reaktions-Klebstoffs eine weich-plastische nicht reaktive Paste verwendet wurde. Damit konnten die Linearitätswerte innerhalb des Temperaturbereichs von -40°C bis +85°C nahezu konstant gehalten werden.

Ein deutlicher Vorteil des nanokristallinen Materials ist die Variabilität der Permeabilität, die beim Einsatz einer Trogfixierung auch mit zufriedenstellender Linearität in die Anwendung zu transportieren ist. Durch die erweiterten nutzbaren Aussteuerungsbereiche kann ein Gleichstrom-toleranter Stromtrafo leicht auf ein Optimum an Vorbelastbarkeit abgestimmt werden. Zur Verbesserung der Linearitäten, kann auch die Magnetostriktion verkleinert werden, wenn der Prozentsatz des zugesetzten Nickels von 10% reduziert wird, um auf Permeabilitäten von 4000 bzw. 6400 zu kommen.

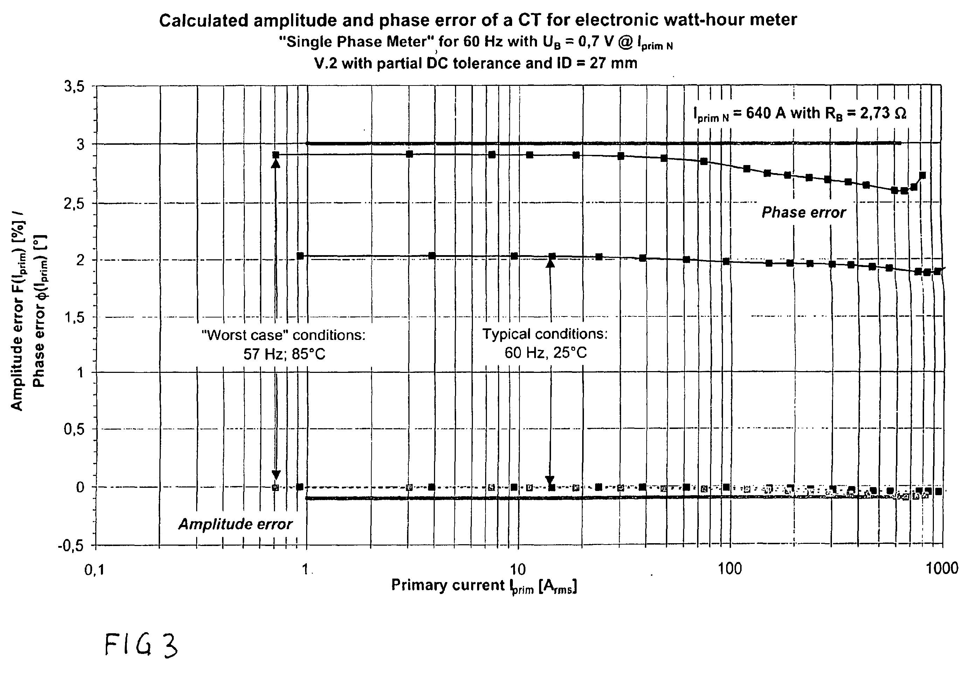

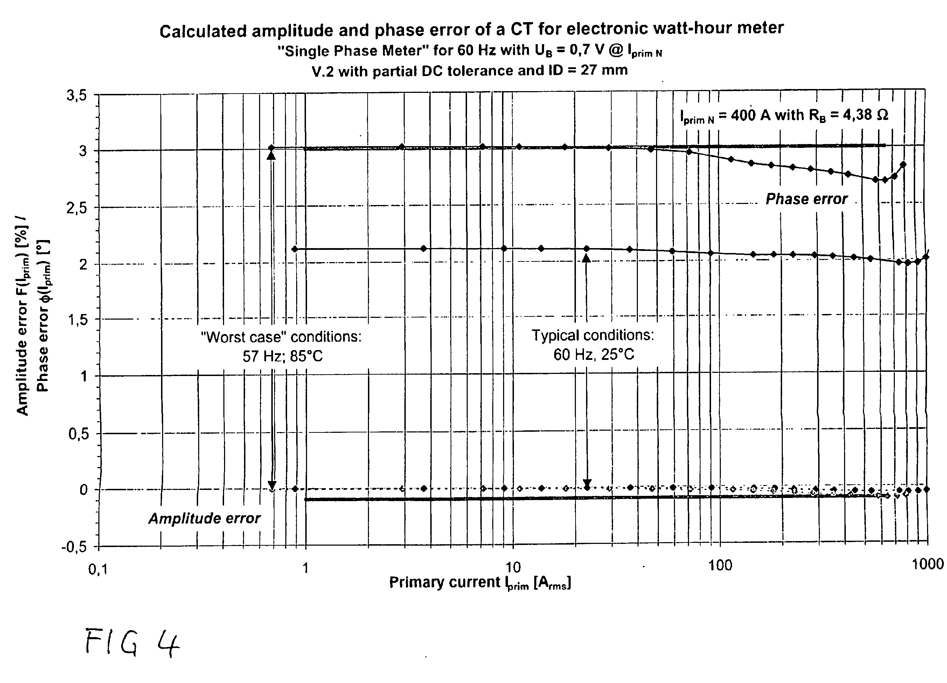

Die Figuren 3 und 4 zeigen den Verlauf des Amplitudenfehlers (in %) und des Phasenfehlers (in °)in Abhängigkeit vom Primärstrom (in A) für verschiedene Nennprimärströme $I_{primN}$ von 640 A (Figur 3) und 400 A (Figur 4).

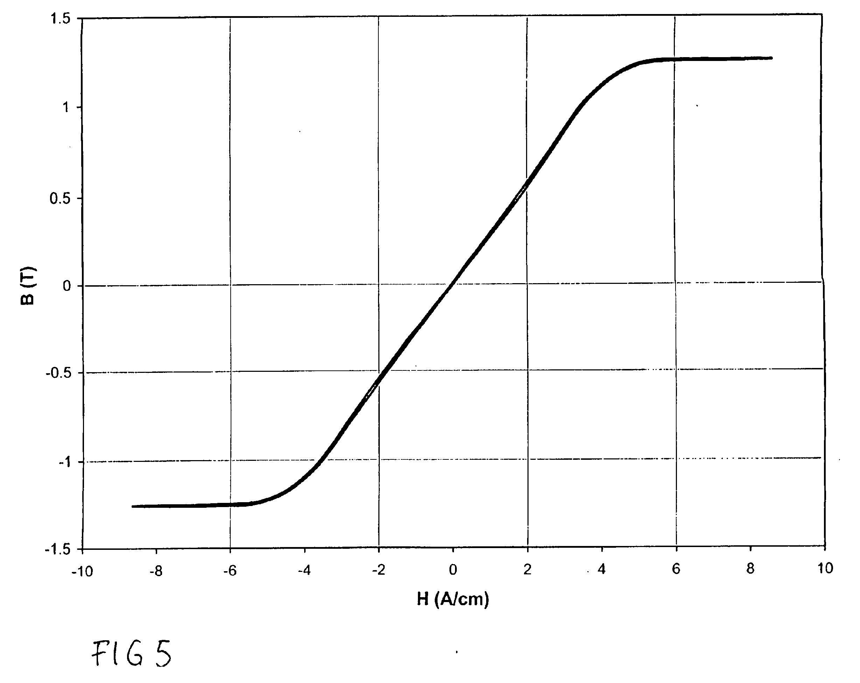

Figur 5 zeigt schließlich die Hystereseschleife (Magnetischer Fluss B in T über der Feldstärke H in A/cm) für eine Legierung mit 65,2 Atom% Fe, 12 Atom% Ni, 0,8 Atom% Cu, 2,5 Atom% Nb, 11,5 Atom% Si und 8 Atom% B. Diese Legierung ist weiteren erfindungsgemäßen Legierungen in der Tabelle 5 gegenübergestellt, wobei QF für Querfeldbehandlung und LF für Längsfeldbehandlung steht. Die mit * gekennzeichneten Legierungen sind Vergleichslegierungen, die nicht zur Erfindung gehören.

Es ist immer eine Wärmebehandlung im Querfeld (Querfeldbehandlung QF) notwendig, wobei mit einer zusätzlichen Wärmebehandlung im Längsfeld (Längsfeldbehandlung LF), die vor oder nach der Querfeldbehandlung stattfinden kann, die Permeabilität nach Belieben eingestellt werden kann. Das hat den Vorteil, dass Kerne mit verschiedenen Eigenschaften aus der selben Legierung hergestellt werden können und damit unterschiedliche Klassen von Stromtransformatoren (Stromklassen). Die Kombination von Temperatur und Dauer der Querfeldbehandlung sollte stets stärkeren Einfluss haben als Temperatur und Dauer der Längsfeldbehandlung.

Tabelle 5

| Nr | Fe | Co | Ni | Cu | Nb | V | Si | B | WB | $B_m$ (T) | $B_r/B_m$ | $H_c$ (A/cm) | $\mu$ | TK (%/°C) | $\lambda_s$ (ppm) |
|---|---|---|---|---|---|---|---|---|---|---|---|---|---|---|---|
| 1 | 75.5 | | 0 | 1 | 3 | | 12.5 | 8 | 0.5h 550°C QF | 1.32 | 0.006 | 0.005 | 10600 | -0.25 | 4.4 |
| 2 | 70.5 | | 5 | 1 | 3 | | 12.5 | 8 | 0.5h 550°C QF | 1.28 | 0.001 | 0.008 | 5020 | -0.18 | - |
| 3a | 65.5 | | 10 | 1 | 3 | | 12.5 | 8 | 0.5h 570°C QF | 1.23 | 0.006 | 0.019 | 2630 | -0.13 | - |
| 3b | 65.5 | | 10 | 1 | 3 | | 12.5 | 8 | 0.5h 550°C QF | 1.21 | 0.001 | 0.005 | 2837 | -0.17 | - |
| 3c | 65.5 | | 10 | 1 | 3 | | 12.5 | 8 | 0.5h 540°C QF | 1.19 | 0.008 | 0.019 | 3200 | -0.16 | 7.7 |
| 3d | 65.5 | | 10 | 1 | 3 | | 12.5 | 8 | 0.5h 550°C LF + 3h 500°C QF | 1.21 | 0.001 | 0.015 | 6080 | -0.05 | - |
| 3e | 65.5 | | 10 | 1 | 3 | | 12.5 | 8 | 0.5h 550°C LF + 3h 460°C QF | 1.20 | 0.003 | 0.030 | 7140 | -0.01 | - |
| 3f | 65.5 | | 10 | 1 | 3 | | 12.5 | 8 | 0.5h 550°C LF + 3h 423°C QF | 1.20 | 0.002 | 0.018 | 8360 | 0.03 | - |
| 4 | 65.5 | | 10 | 1 | 1.5 | 1.5 | 12.5 | 8 | 0.5h 540°C QF | 1.20 | 0.016 | 0.059 | 2578 | -0.16 | 6.5 |
| 5a | 60.5 | | 15 | 1 | 3 | | 12.5 | 8 | 0.5h 550°C QF | 1.12 | 0.005 | 0.026 | 1860 | -0.12 | - |
| 5b | 60.5 | | 15 | 1 | 3 | | 12.5 | 8 | 0.5h 550°C LF + 3h 500°C QF | 1.12 | 0.036 | 0.073 | 4590 | 0.03 | - |
| 5c | 60.5 | | 15 | 1 | 3 | | 12.5 | 8 | 0.5h 550°C LF + 3h 460°C QF | 1.12 | 0.036 | 0.061 | 5420 | -0.001 | - |
| 5d | 60.5 | | 15 | 1 | 3 | | 12.5 | 8 | 0.5h 550°C LF + 3h 423°C QF | 1.12 | 0.044 | 0.031 | 6490 | 0.02 | - |
| 6 | 55.5 | | 20 | 1 | 3 | | 12.5 | 8 | 0.5h 550°C QF | 0.18 | 0.140 | 1.14 | 175 | | |
| 7 | 64.5 | | 10 | 1 | 3 | | 14 | 7.5 | 0.5h 550°C QF | 1.10 | 0.005 | 0.012 | 3520 | -0.15 | - |
| 8 | 66 | | 10 | 1 | 3 | | 11 | 9 | 0.5h 550°C QF | 1.25 | 0.001 | 0.003 | 2617 | -0.15 | 8.7 |
| 9a | 63.5 | | 10 | 1 | 3 | | 15.9 | 6.6 | 0.5h 550°C QF | 1.14 | 0.002 | 0.003 | 4307 | -0.12 | - |
| 9b | 63.5 | | 10 | 1 | 3 | | 15.9 | 6.6 | 0.5h 540°C QF | 1.12 | 0.008 | 0.013 | 5080 | -0.09 | 4.4 |
| 10 | 63.5 | | 10 | 1 | 1.5 | 1.5 | 15.9 | 6.6 | 0.5h 540°C QF | 1.12 | 0.011 | 0.026 | 3400 | -0.12 | 3.1 |
| 11 | 66.7 | | 10 | 0.8 | 3 | | 11.5 | 8 | 0.5h 550°C QF | 1.23 | 0.000 | 0.002 | 2610 | -0.14 | 8.1 |
| 12 | 67 | | 10 | 0.8 | 2.7 | | 11.5 | 8 | 0.5h 550°C QF | 1.27 | 0.001 | 0.003 | 2610 | -0.13 | - |
| 13 | 69.2 | | 8 | 0.8 | 2.5 | | 11.5 | 8 | 0.5h 550°C QF | 1.32 | 0.012 | 0.041 | 3090 | -0.12 | 7.6 |
| 14 | 67.2 | | 10 | 0.8 | 2.5 | | 11.5 | 8 | 0.5h 550°C QF | 1.29 | 0.006 | 0.022 | 2650 | -0.12 | - |
| 15 | 65.2 | | 12 | 0.8 | 2.5 | | 11.5 | 8 | 0.5h 550°C QF | 1.26 | 0.004 | 0.019 | 2230 | -0.11 | 8.8 |
| 16 | 63.2 | | 14 | 0.8 | 2.5 | | 11.5 | 8 | 0.5h 550°C QF | 1.16 | 0.110 | 0.620 | 1720 | 0.09 | - |

(fortgesetzt)

| Nr | Fe | Co | Ni | Cu | Nb | V | Si | B | WB | $B_m$ (T) | $B_r/B_m$ | $H_c$ (A/cm ) | $\mu$ | TK (%/°C) | $\lambda_s$ (ppm) |
|---|---|---|---|---|---|---|---|---|---|---|---|---|---|---|---|
| 17 | 67.4 | | 10 | 0.8 2.3 | | | 11.5 | 8 | 0.5h550°CQF | 1.30 | 0.016 | 0.063 | 2610 | -0.09 | - |
| 18 | 67.6 | | 10 | 0.8 2.1 | | | 11.5 | 8 | 0.5h550°CQF | 1.30 | 0.064 | 0.253 | 2600 | 0.04 | - |
| 19 | 66.8 | | 10 | 0.8 | 2.9 | | 11.5 | 8 | 0.5h550°CQF | 1.25 | 0.012 | 0.041 | 2787 | -0.14 | 7.9 |
| 20 | 61.8 | 5 | 10 | 0.8 | 2.9 | | 11.5 | 8 | 0.5h550°CQF | 1.25 | 0.008 | 0.039 | 2045 | -0.13 | 10.7 |
| 21 | 56.8 | 10 | 10 | 0.8 | 2.9 | | 11.5 | 8 | 0.5h 550°C QF | 1.24 | 0.012 | 0.073 | 1627 | -0.15 | 12.5 |
| 22 | 46.8 | 20 | 10 | 0.8 | 2.9 | | 11.5 | 8 | 0.5h 550°C QF | 1.22 | 0.015 | 0.127 | 1097 | -0.16 | 20.5 |
| 23 | 36.8 | 30 | 10 | 0.8 2.9 | | | 11.5 | 8 | 0.5h550°CQF | 1.17 | 0.208 | 0.208 | 845 | -0.17 | 23.5 |
| 24 | 26.8 | 40 | 10 | 0.8 | 2.9 | | 11.5 | 8 | 0.5h 550°C QF | 1.03 | 0.040 | 0.519 | 582 | -0.46 | 22 |

Die in der obigen Tabelle 5 aufgeführten Werte bedeuten dabei:

1. QF = Wärmebehandlung im magnetischen Querfeld, LF = Wärmebehandlung im magnetischen Querfeld.
2. Bm wurde gemessen bei einer maximalen Feldstärke von Hm= 8 A/cm für die Beispiele 1 bis 21 und von Hm= 32 A/cm für die Beispiele 22 bis 24.
3. $\mu$ bezeichnet die mittlere Permeabilität, definiert als die mittlere Steigung der Hysteresekurve
4. Nr. 1 und Nr. 6 sind NICHT-erfindungsgemäße Vergleichsbeispiele

Die Nummerierung der Legierungen aus Tabelle 5 unterscheidet sich von derjenigen in Tabellen 1-4. Daher können sich die Permeabilitätswerte zwischen Tabelle 5 und den anderen Tabellen leicht unterscheiden da es sich um verschiedene Versuchsserien handelt.

Mit den erfindungsgemäßen Magnetkernen lassen sich Stromtransformatoren herstellen, bei denen die maximale unverzerrt abbildbare Amplitude eines halbwellengleichgerichteten sinusförmigen Primärstroms vom Zahlenwert mindestens 10%, besser 20% des Effektivwerts des maximal unverzerrt abbildbaren bipolaren sinusförmigen Primärstroms beträgt.

### Patentansprüche

1. Magnetkern mit einer linearen B-H-Schleife und einer hohen Aussteuerbarkeit bei Wechselstrom und Gleichstrom, der eine relative Permeabilität $\mu$ aufweist, die größer als 500 und kleiner als 15.000 ist, der eine Sättigungsmagnetostriktion $\lambda_s$ aufweist, deren Betrag kleiner als 15 ppm ist, und der aus einer ferromagnetischen Legierung besteht, bei der mindestens 50% der Legierung von feinen kristallinen Teilchen mit einer mittleren Teilchengröße von 100 nm oder weniger eingenommen wird (nanokristalline Legierung) und die durch die Formel $Fe_a Co_b Ni_c Cu_d M_e Si_f B_g X_h$ **gekennzeichnet** ist, worin M zumindest eines der Elemente V, Nb, Ta, Ti, Mo, W, Zr, Cr, Mn und Hf ist,
a, b, c, d, e, f, g in Atom-% angegeben sind,
X die Elemente P, Ge, C sowie handelsübliche Verunreinigungen bezeichnet und a, b, c, d, e, f, g, h die folgenden Bedingungen erfüllen:

$0 \leq b \leq 40$
$2 < c < 20$
$0,5 \leq d \leq 2;$
$1 \leq e \leq 6;$
$6,5 \leq f \leq 18;$
$5 \leq g \leq 14;$
$h < 5$ Atom%

mit $5 \leq b + c \leq 45$, wobei $a + b + c + d + e + f = 100$.

2. Magnetkern nach Anspruch 1, wobei a, b, c, d, e, f, g, h die folgenden Bedingungen erfüllen:

$0 \leq b \leq 20$
$2 < c \leq 15$
$0,5 \leq d \leq 2;$
$1 \leq e \leq 6;$
$6,5 \leq f \leq 18;$
$5 \leq g \leq 14;$
$h < 5$ Atom%

mit $5 \leq b + c \leq 30$, wobei $a + b + c + d + e + f = 100$.

3. Magnetkern nach einem der vorherigen Ansprüche, wobei
a, b, c, d, e, f, g, h die folgenden Bedingungen erfüllen:

$0 \leq b \leq 10$
$2 < c \leq 15$
$0,5 \leq d \leq 2;$
$1 \leq e \leq 6;$

$6{,}5 \leq f \leq 18;$
$5 \leq g \leq 14;$
$h < 5\ \text{Atom}\%$

mit $5 \leq b + c \leq 20$, wobei $a + b + c + d + e + f = 100$.

4. Magnetkern nach einem der vorhergehenden Ansprüche, bei dem a, b, c, d, e, f, g und h die folgenden Bedingungen erfüllen:

$0{,}7 < d < 1{,}5;$
$2 < e < 4;$
$8 < f < 16;$
$6 < g < 12;$ mit
$h < 2.$

5. Magnetkern nach einem der vorherigen Ansprüche, bei dem der Co-Gehalt kleiner oder gleich dem Ni-Gehalt ist.

6. Magnetkern nach einem der vohergehenden Ansprüche in der Form eines Ringbandkernes , welcher aus einem Band mit einer Dicke kleiner 50 $\mu$m gewickelt ist

7. Magnetkern nach einem der Ansprüche 1 bis 6, bei dem der Betrag der Koerzitivfeldstärke $H_c$ kleiner als 1 A/cm ist.

8. Magnetkern nach einem der Ansprüche 1 bis 7, bei dem das Remanenzverhältnis kleiner als 0,1 ist.

9. Magnetkern nach einem der Ansprüche 1 bis 8, der eine relative Permeabilität $\mu$ aufweist, die größer als 1000 und kleiner als 10.000 ist.

10. Magnetkern nach einem der Ansprüche 1 bis 9, der eine relative Permeabilität $\mu$ aufweist, die größer als 1.500 und kleiner als 6.000 ist.

11. Magnetkern nach einem der Ansprüche 1 bis 10, bei dem die Sättigungsmagnetostriktion $\lambda_s$ kleiner als 10 ppm ist.

12. Magnetkern nach einem der Ansprüche 1 bis 11, bei der mindestens 50% der Legierung von feinen kristallinen Teilchen mit einer mittleren Teilchengröße von 50 nm oder weniger eingenommen wird.

13. Magnetkern nach einem der Ansprüche 1 bis 12, bei dem er als ein geschlossener, luftspaltloser Ringkern, Ovalkern oder Rechteckkern ausgestaltet ist.

14. Magnetkern nach einem der Ansprüche 1 bis 13, der in einem Trog fixiert ist.

15. Magnetkern nach Anspruch 14 wobei zur Fixierung des Kernes aus einem weichelastischer Reaktions-Klebstoff und/oder einer weich-plastischen nicht reaktiven Paste vorgesehen ist.

16. Verfahren zur Herstellung eines Magnetkerns nach einem der Ansprüchen 1 bis 15, bei dem eine Wärmebehandlung im magnetischen Querfeld erfolgt.

17. Verfahren nach Anspruch 16, bei dem zudem eine Wärmebehandlung im magnetischen Längsfeldfeld erfolgt

18. Verfahren nach Anspruch 16 oder17, bei dem die Wärmebehandlung im Querfeld vor der Wärmebehandlung im Längsfeld erfolgt.

19. Verfahren nach Anspruch 16 oder17, bei dem die Wärmebehandlung im Querfeld nach der Wärmebehandlung im Längsfeld erfolgt.

20. Stromtransformator für Wechselstrom mit einem Magnetkern nach einem der Ansprüche 1 bis15, wobei der Stromtransformator neben dem Magnetkern als Trafokern eine Primärwicklung und zumindest eine Sekundärwicklung aufweist, wobei die Sekundärwicklung durch einen Bürdenwiderstand und/oder eine Messelektronik niederohmig abgeschlossen ist.

21. Stromtransformator nach Anspruch 20, der einen Phasenfehler von maximal 7,5° bei bestimmungs- und bemessungsgemäßer Beschaltung mit Bürdenwiderstand und/oder Messelektronik aufweist.

22. Stromtransformator nach Anspruch 21, der einen Phasenfehler von maximal 5° bei bestimmungs- und bemessungsgemäßer Beschaltung mit Bürdenwiderstand und/oder Messelektronik aufweist.

23. Stromkompensierte Drossel mit einem Magnetkern nach einem der Ansprüche 1 bis 15, wobei die Drossel neben dem Magnetkern (M) mindestens zwei Wicklungen aufweist.

24. Stromkompensierte Drossel nach Anspruch 23, wobei die Drossel auch beim Fließen eines Ableitstroms von mindestens 10% des Nennstroms eine Einfügungsdämpfung von mindestens 20 dB im Frequenzbereich von 150 kHz bis 1 MHz aufweist.

25. Stromkompensierte Drossel nach Anspruch 24, wobei die Drossel auch beim Fließen eines Ableitstroms von mindestens 20% des Nennstroms eine Einfügungsdämpfung von mindestens 20 dB im Frequenzbereich von 150 kHz bis 1 MHz aufweist.

**Claims**

1. A magnetic core with a linear B-H loop and a high controllability with alternating current and direct current, which has a relative permeability $\mu$ which is larger than 500 and smaller than 15,000, which has a saturation magnetostriction $\lambda_s$ whose magnitude is smaller than 15ppm, and which consists of a ferro-magnetic alloy in which at least 50% of the alloy is constituted by fine crystalline particles with a mean particle size of 100nm or smaller (noncrystaleine alloy) and which is **characterised by** the formula $Fe_aCo_bNi_cCu_dM_eSi_fB_gX_h$, wherein M is at least one of the elements V, Nb, Ta, Ti, Mo, W, Zr, Cr, Mn and Hf,
a, b, c, d, e, f and g are given in atom-%,
X refers to the elements P, Ge, C and commercially conventional impurities and a, b, c, d, e, f, g, h fulfil the following conditions:

$0 \leq b < 40$
$2 < c < 20$
$0.5 \leq d \leq 2;$
$1 \leq e \leq 6;$
$6.5 \leq f \leq 18;$
$5 \leq g \leq 14;$
$h < 5$ Atom%

with $5 \leq b+c \leq 45$, wherein a+b+c+d+e+f= 100.

2. A magnetic core as claimed in claim, wherein a, b, c, d, e, f, g and h fulfil the following conditions;

$0 \leq b \leq 20$
$2 < c < 15$
$0.5 \leq d \leq 2;$
$1 \leq e \leq 6;$
$6.5 \leq f \leq 18;$
$5 \leq g \leq 14;$
$h < 5$ Atom%

with $5 \leq b + c \leq 30$, wherein $a + b + c + d + e + f = 100$.

3. A magnetic core as claimed in one of the preceding claims, wherein a, b, c, d, e, f, g and h fulfil the following conditions:

$0 \leq b \leq 10$
$2 < c \leq 15$
$0.5 \leq d \leq 2;$
$1 \leq e \leq 6;$

$6.5 \leq f \leq 18;$
$5 \leq g \leq 14;$
$h < 5$ Atom%

with $5 \leq b + c \leq 30$, wherein $a + b + c + d + e + f = 100$.

4. A magnetic core as claimed in one of the preceding claims, in which a, b, c, d, e, f, g and h fulfil the following conditions:

$0.7 < d < 1.5;$
$2 < e < 4;$
$8 < f < 16;$
$6 < g < 12;$ with
$h < 2.$

5. A magnetic core as claimed in one of the preceding claims, in which the Co content is smaller than or equal to the Ni content.

6. A magnetic core as claimed in one of the preceding claims in the form of an annular strip wound core, which is wound from a strip with a thickness smaller than 50 $\mu$m.

7. A magnetic core as claimed in any one of claims 1 to 6, in which the magnitude of the coercive field strength $H_c$ is smaller than 1 A/cm.

8. A magnetic core as claimed in any one of claims 1 to 7, in which the remanence ratio is smaller than 0.1.

9. A magnetic core as claimed in any of claims 1 to 8 which has a relative permeability $\mu$ which is greater than 1000 and smaller than 10,000.

10. A magnetic core as claimed in any one of claims 1 to 9, which has a relative permeability $\mu$, which is greater than 1,500 and smaller than 6,000.

11. A magnetic core as claimed in any one of claims 1 to 10, in which the saturation magnetostriction $\lambda_s$ is smaller than 10ppm.

12. A magnetic core as claimed in any one of claims 1 to 11, in which at least 50% of the alloy is constituted by fine crystalline particles with a mean particle size of 50nm or less.

13. A magnetic core as claimed in any one of claims 1 to 12, in which it is constructed in the form of a closed circular core, oval core or rectangular core with no air gap.

14. A magnetic core as claimed in any one of claims 1 to 13, which is fixed in a trough.

15. A magnetic core as claimed in claim 14, wherein a soft-elastic reactive plastic material and/or a soft-plastic non-reactive paste is provided for fixing the core.

16. A method of manufacturing a magnetic core as claimed in any one of claims 1 to 15, in which a heat treatment is performed in a transverse magnetic field.

17. A method as claimed in claim 16 in which a heat treatment is performed additionally in a longitudinal field.

18. A method as claimed in claim 16 or 17, in which the heat treatment in the transverse field is effected before the heat treatment in the longitudinal field.

19. A method as claimed in claim 16 or 17, in which the heat treatment in the transverse field is effected after the heat treatment in the longitudinal field.

20. An electric transformer for alternating current with a magnetic core as claimed in any one of claims 1 to 15, wherein, in addition to the magnetic core constituting a transformer core, the electric transformer includes a primary winding and at least one secondary winding, wherein the secondary winding is terminated in a low-resistance manner by a load resistor and/or an electronic measuring system.

21. An electric transformer as claimed in claim 20, which has a phase error of at most 7.5° when connected as directed and in accordance with measurements to a load resistor and/or electronic measuring system.

22. An electric transformer as claimed in claim 21, which has a phase error of at most 5° when connected as directed and in accordance with measurements to a load resistor and/or electronic measuring system.

23. A current-compensated choke with a magnetic core as claimed in any one of claims 1 to 15, wherein, in addition to the magnetic core (M) the choke includes at least two windings.

24. A current-compensated choke as claimed in claim 23, wherein the choke has an insertion loss of at least 20dB in the frequency range 150kHz to 1MHz, even when a leakage current of at least 10% of the nominal current is flowing.

25. A current-compensated choke as claimed in claim 24, wherein the choke has an insertion loss of at least 20dB in the frequency range 150kHz to 1MHz, even when a leakage current of at least 20% of the nominal current is flowing.

**Revendications**

1. Noyau magnétique à boucle B/H linéaire et capacité de commande élevée par des courants alternatifs et des courants continus, ayant
   une perméabilité relative $\mu_r$ supérieure à 500 et inférieure à 15 000,
   une magnétostriction de saturation $\lambda_s$ dont la valeur est inférieure à 15 ppm et qui se compose d'un alliage ferromagnétique dont 50 % de l'alliage est formé de fines particules cristallines, d'une taille moyenne de particule de 100 nm ou moins (alliage nanocristallin) et qui est défini par la formule suivante :

$$Fe_3Co_bNi_cCu_dM_eSI_fB_gX_h \; ;$$

dans laquelle

   M est au moins l'un des éléments V, Nb, Ta, Ti, Mo, W, Zr, Cr, Mn et Hf;
   a, b, c, d, e, f, g sont donnés en pourcentage atomique ;
   X représente les éléments P, Ge, C ainsi que les combinaisons habituelles dans le commerce et
   a, b, c, d, e, f, g, h répondent aux conditions suivantes :

   $0 \leq b \leq 40$ ;
   $2 < c < 20$;
   $0,5 \leq d \leq 2$ ;
   $1 \leq e \leq 6$ ;
   $6,5 \leq f \leq 18$;
   $5 \leq g \leq 14$;
   $h < 5 \%$ Atom

   avec $5 \leq b + c \leq 45$, et $a + b + c + d + e + f = 100$.

2. Noyau magnétique selon la revendication 1,
   dans lequel a, b, c, d, e, f, g, h, répondent aux conditions suivantes :

   $0 \leq b \leq 20$;
   $2 < c < 15$;
   $0,5 \leq d \leq 2$;
   $1 \leq e \leq 6$;
   $6,5 \leq f \leq 18$;
   $5 \leq g \leq 14$;
   $h < 5 \%$ Atom

avec ≤ b ≤ b + c ≤ 30, et a + b + c + d + e + f = 100.

3. Noyau magnétique selon l'une des revendications précédentes,
   dans lequel a, b, c, d, e, f, g, h, correspondent aux conditions suivantes :

   $0 \leq b \leq 10$;
   $2 < c \leq 15$;
   $0,5 \leq d \leq 2$;
   $1 \leq e \leq 6$;
   $6,5 \leq f \leq 18$;
   $5 \leq g \leq 14$ ;
   $h < 5$ % Atom

   avec $5 \leq b + c \leq 20$, et a + b + c + d + e + f = 100.

4. Noyau magnétique selon l'une des revendications précédentes,
   dans lequel a, b, c, d, e, f, g, h, répondent aux conditions suivantes :

   $0,7 < d < 1,5$ ;
   $2 < e < 4$ ;
   $8 < f < 16$;
   $6 < g < 12$ ; et
   $H < 2$.

5. Noyau magnétique selon l'une des revendications précédentes,
   dans lequel
   la teneur en Co est inférieure ou égale à la teneur en Ni.

6. Noyau magnétique selon l'une des revendications précédentes,
   sous la forme d'un noyau en ruban annulaire formé d'un ruban d'une épaisseur inférieure à 50 $\mu$m.

7. Noyau magnétique selon l'une des revendications 1 à 6,
   dans lequel
   l'amplitude de l'intensité du champ coercitif $H_c$ est inférieure 1 A/cm.

8. Noyau magnétique selon l'une des revendications 1 à 7,
   dans lequel
   le coefficient de rémanence est inférieur à 0,1.

9. Noyau magnétique selon l'une des revendications 1 à 8,
   **caractérisé en ce que**
   la perméabilité relative $\mu$ est supérieure à 1000 et inférieure à 10000.

10. Noyau magnétique selon l'une des revendications 1 à 9,
    dans lequel
    la perméabilité relative $\mu$ est supérieure à 1500 et inférieure à 6000.

11. Noyau magnétique selon l'une des revendications 1 à 10,
    dans lequel
    la magnétostriction de saturation $\lambda_S$ est inférieure à 10 ppm.

12. Noyau magnétique selon l'une des revendications 1 à 11,
    dans lequel
    moins 50% de l'alliage correspond à de fines particules cristallines d'une taille moyenne de particule de 50 nm ou moins.

13. Noyau magnétique selon l'une des revendications 1 à 12, réalisé
    sous la forme d'un noyau annulaire fermé, sans entrefer, d'un noyau ovale ou d'un noyau rectangulaire.

**14.** Noyau magnétique selon l'une des revendications 1 à 13, fixé dans une goulotte.

**15.** Noyau magnétique selon la revendication 14,
**caractérisé en ce que**
la fixation du noyau est réalisée avec un adhésif à réaction, à forte élasticité et/ou une pâte non réactive, plastique, souple.

**16.** Procédé de fabrication d'un noyau magnétique selon l'une des revendications 1 à 15, dans lequel
le traitement thermique se fait dans un champ magnétique transversal.

**17.** Procédé selon la revendication 16, dans lequel
en plus le traitement thermique se fait dans un champ magnétique longitudinal.

**18.** Procédé selon la revendication 16 ou 17, dans lequel
le traitement thermique dans le champ transversal précède le traitement thermique dans le champ longitudinal.

**19.** Procédé selon la revendication 16 ou 17, dans lequel
le traitement thermique dans le champ transversal se fait après le traitement thermique dans le champ longitudinal.

**20.** Transformateur d'intensité pour courant alternatif avec un noyau magnétique selon l'une des revendications 1 à 15, le transformateur d'intensité ayant en plus du noyau magnétique, comme noyau de transformateur, un enroulement primaire et au moins un enroulement secondaire, l'enroulement secondaire étant bouclé par une résistance de charge et/ou une électronique de mesure à faible valeur ohmique.

**21.** Transformateur selon la revendication 20, ayant un défaut de phase au maximum de 7,5° pour le branchement selon la détermination et les dimensions sur une résistance de charge et/ou une électronique de mesure.

**22.** Transformateur selon la revendication 21, présentant une erreur de phase au maximum de 5° pour le branchement selon la détermination et les dimensions sur une résistance de charge et/ou une électronique de mesure.

**23.** Bobine à compensation de courant comportant un noyau magnétique selon l'une des revendications 1 à 15, la bobine ayant au moins deux enroulements en plus du noyau magnétique (M).

**24.** Bobine à compensation de courant selon la revendication 23, qui présente pour un passage d'un courant de déviation d'au moins 10 % du courant nominal, un amortissement intégré d'au moins 20 dB dans la plage des fréquences comprises entre 150 kHz et 1 MHz.

**25.** Bobine à compensation de courant selon la revendication 24, selon laquelle
pour le passage d'un courant de dérivation d'au moins 20 % du courant nominal, on a un amortissement d'insertion d'au moins 20 dB dans la plage des fréquences comprises entre 150 kHz et 1 MHz.

## FIG 1

**Typische Daten:**

$N_{prim}$ : 1...6

$I_{prim}$ : 5$A_{eff}$..120$A_{eff}$ (max.)

$N_{sec}$ : 500 ...4000

$I_{sec} \approx -I_{prim} * N_{prim} / N_{sec}$

$R_B$ : 1$\Omega$ ...200 $\Omega$ (Bürde)

$R_{cu}$ :1$\Omega$...200 $\Omega$ (Wicklung)

$U_{signal}$ : 300 m$V_{eff}$ (max.)

Frequenz : 50 / 60 Hz

## FIG 2

# Calculated amplitude and phase error of a CT for electronic watt-hour meter
## "Single Phase Meter" for 60 Hz with $U_B = 0{,}7$ V @ $I_{prim\,N}$
### V.2 with partial DC tolerance and ID = 27 mm

$I_{prim\,N} = 640$ A with $R_B = 2{,}73\ \Omega$

Phase error

"Worst case" conditions:
57 Hz; 85°C

Typical conditions:
60 Hz, 25°C

Amplitude error

Amplitude error $F(I_{prim})$ [%] / Phase error $\phi(I_{prim})$ [°]

Primary current $I_{prim}$ [$A_{rms}$]

EP 1 609 159 B1

FIG 3

Calculated amplitude and phase error of a CT for electronic watt-hour meter
"Single Phase Meter" for 60 Hz with $U_B$ = 0,7 V @ $I_{prim\,N}$
V.2 with partial DC tolerance and ID = 27 mm

FIG 4

EP 1 609 159 B1

FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3526047 A
- DE 19548530 A1
- WO 0030131 A